## Europäisches Patentamt
## European Patent Office
## Office européen des brevets

(19)

(11) Veröffentlichungsnummer: **0 052 298**
**A2**

(12) **EUROPÄISCHE PATENTANMELDUNG**

(21) Anmeldenummer: 81109446.5

(22) Anmeldetag: 30.10.81

(51) Int. Cl.³: **B 01 F 15/00**
**B 01 F 7/18, C 12 G 1/02**

(30) Priorität: 18.11.80 DE 3043541

(43) Veröffentlichungstag der Anmeldung:
26.05.82 Patentblatt 82/21

(84) Benannte Vertragsstaaten:
AT CH FR IT LI

(71) Anmelder: Rieger, Herbert
Talstrasse 33
D-7121 Ingersheim(DE)

(72) Erfinder: Rieger, Herbert
Talstrasse 33
D-7121 Ingersheim(DE)

(74) Vertreter: Patentanwälte Kohler - Schwindling - Späth
Hohentwielstrasse 41
D-7000 Stuttgart 1(DE)

(54) Rührwerk für Gärbehälter für Traubenmaische.

(57) Ein Rührwerk für Traubenmaische, das eine umlaufende Welle und blattförmige Mischflügel aufweist, die mindestens einen in einem Winkel schräg gegen die Umlaufrichtung angestellten ersten Abschnitt aufweisen, ist dadurch gekennzeichnet, daß sich an den ersten Abschnitt (19, 23) in mindestens einer Umlaufrichtung gesehen ein zweiter in gleicher Richtung angestellter Flügelabschnitt (20, 21, 25, 26, 50, 51) anschließt, dessen Anstellwinkel kleiner als der des ersten Abschnitts ist.

Fig.1

EP 0 052 298 A2

Anmelder:

Herbert Rieger
Talstr. 33
7121 Ingersheim

Stuttgart, den 26.10.1981
P4134  Ausl. K/C

Rührwerk für Gärbehälter für Traubenmaische

Die Erfindung bezieht sich auf ein Rührwerk für einen
Gärbehälter für Traubenmaische, das eine umlaufende Welle
und blattförmige Mischflügel aufweist, die mindestens einen
in einem Winkel schräg gegen die Umlaufrichtung angestellten
Abschnitt aufweisen.

Bei durch die DE-OS 26 43 560 bekannt gewordenen Rührwerken
dieser Art folgt in radialer Richtung ein Abschnitt des
Rührflügels, der in einer Umlaufrichtung den Behälterinhalt nach oben ablegt und ein Rührflügelabschnitt, der den Behälterinhalt nach unten ablenkt, aufeinander. Diese Abschnitte
sind in einem verhältnismäßig großen Winkel gegen die Umlaufrichtung angestellt. Diese bekannten Rührflügel eignen
sich jedoch nicht zur Verwendung in Gärbehältern für Traubenmaische, weil Traubenmaische von diesen bekannten Mischflügeln nur in unbefriedigendem Maße von oben nach unten
oder umgekehrt durchmischt wird, sondern von diesen Mischflügeln zumeist in eine kreisende Bewegung mitgenommen wird.
Der letztgenannte Nachteil wird in der Regel dadurch vermieden, daß von der Behälterinnenwand starre Gegenhalter bis in
den Bereich der Mischflügel hineingreifen. Meist jedoch
behindern diese Gegenhalter eine gute vertikale Durchmischung der Traubenmaische, die ja Trester, Hefe, Saft und
Traubenkerne enthält, also Stoffe mit sehr unterschiedlicher
Dichte. Insbesondere das Durchmischen von bereits in Gärung
befindlicher oder schon vergorener Traubenmaische läßt sich
mit diesen bekannten Rührwerken nur unbefriedigend ausführen.

Wählt man jedoch bei den bekannten Mischflügeln nach der
DE-OS 26 43 560 den Anstellwinkel relativ klein, so ist zwar
die Tendenz, daß der Rührflügel die Traubenmaische in eine
kreisende Bewegung mitnimmt, geringer, es findet jedoch nur
eine sehr geringe Anhebung des Mischgutes und damit nur eine
geringe und unbefriedigende senkrechte Durchmischung von
Traubenmaische statt. Man kann aber nicht schwach angestellte Mischflügel in Umfangrichtung beliebig vergrößern, um auf
diese Weise das Mischgut hinreichend hoch anzuheben, weil
mit dieser Vergrößerung der Fläche der Mischflügel wiederum
die Tendenz wächst, daß das Mischgut in kreisende Bewegung
versetzt und nicht angehoben wird.

Um eine vertikale Durchmischung der Traubenmaische zu erhalten, ist in der Patentanmeldung P 30 12 829 vorgeschlagen worden, ein die vertikale Welle im Abstand umgebendes, schneckengangförmig gewundenes und mit der vertikalen umlaufenden Welle durch Stäbe gehaltenes Blechband vorzusehen, das mit der Welle umläuft und in der einen Drehrichtung das Mischgut nach oben transportiert, sofern dieses nicht mit dem verhältnismäßig breiten Blechband mitrotiert. Unmittelbar am Umfang der Welle ist noch ein zweiter schneckengangförmiger Blechstreifen befestigt, der in einem entgegengesetzten Gewindegang geformt ist, so daß in der einen Drehrichtung der äußere Schneckengang Mischgut nach oben und der innere Schneckengang Mischgut nach unten drückt. Diese Konstruktion ist außerordentlich aufwendig, die Blechbänder sind schlecht zu reinigen und fördern wegen ihrer großen Fläche die Tendenz der Traubenmaische, mit der Rührvorrichtung mitzurotieren. Außerdem ist der Durchmischungsgrad der Traubenmaische, insbesondere dann, wenn Rotweinmaische durchgemischt werden soll, erheblich geringer als man theoretisch erwarten könnte.

Jedoch stellt gerade die Durchmischung von Rotweinmaische während der Gärung ein besonderes Problem dar. In Behältern ohne Rührwerk setzen sich dabei die Trester oben ab und bilden einen sehr festen Tresterkuchen. Soll der Rotwein jedoch eine schöne Farbe bekommen, so müssen die Traubentrester während der Gärung mit dem Saft innig in Berührung sein. Andererseits muß aber die Mischbewegung sehr schonend erfolgen.

Der Erfindung liegt die Aufgabe zugrunde, ein Rührwerk für einen Behälter zu enwickeln, das Traubenmaische, insbesondere Rotweinmaische oder abgetropfte Weißweinmaische so durchmischt, daß Rotwein eine schöne Farbe bekommt und Weißwein ebenfalls optimal behandelt werden kann, im übrigen aber den Forderungen nach leichter Reinigungsmöglichkeit und geringem Konstruktionsaufwand entspricht.

Gemäß der Erfindung wird diese Aufgabe dadurch gelöst, daß sich in mindestens einer Umlaufrichtung gesehen an einen ersten Rührflügelabschnitt ein zweiter in gleicher Richtung angestellter Flügelabschnitt anschließt, dessen Anstellwinkel kleiner als der des ersten Abschnittes ist.

Während also bei der bekannten Anordnung nach der DE-OS 26 43 560 von der senkrechten umlaufenden Welle aus in radialer Richtung gesehen Rührflügelabschnitte mit wechselnder Anstellungsrichtung aufeinanderfolgen, folgen bei dem erfindungsgemäßen Rührwerk Mischflügelabschnitte mit unterschiedlichem Anstellwinkel gleicher Anstellrichtung in Umlaufrichtung des Mischflügels gesehen aufeinander.

Versuche haben ergeben, daß die erfindungsgemäßen Rührwerke bei der Behandlung von Traubenmaische einen ausgezeichneten Durchmischungsgrad ergeben, insbesondere eignen sich diese Rührwerke zur Behandlung von gärender Maische, also für Gärbehälter für Traubenmaische. Dies wird darauf zurückgeführt, daß der in Drehrichtung vordere Flügelabschnitt mit kleinerem Anstellwinkel zunächst einen Schnitt in das Mischgut führt. Ist das Rührwerk in einem stehenden Behälter mit
senkrechter Rührwerkswelle angeordnet und soll der betreffende Rührflügel das Mischgut nach oben fördern, so trennt
also der Flügelabschnitt mit dem kleineren Anstellwinkel das
vor dem Flügel befindliche Teilvolumen Traubenmaische von
dem darunterliegenden Teilvolumen ab, wodurch die vor dem
Flügel befindliche Maischeportion an der Oberfläche des
Flügelabschnittes mit dem größeren Anstellwinkel ohne
Schwierigkeit nach oben gleitet. Dabei kann der Anstellwinkel dieses in Drehrichtung nachfolgenden Flügelabschnittes
relativ groß sein, beispielsweise 45° sein. Da die vor dem
Flügel befindliche Maischeportion durch den vorlaufenden
Flügelabschnitt nach unten abgeschnitten ist, gleitet sie
auch bei größeren Anstellwinkeln des nachfolgenden Abschnittes nach oben, ohne von dem Flügel in kreisende Bewegung
versetzt zu werden.

Dieses Rührwerk löst auch das Problem der Farbstoffauslaugung bei Rotwein befriedigend, denn durch das Rührwerk wird
vor allem ein Heben und Senken von Teilen des Tresterkuchens
und dadurch eine besonders schonende Mischbewegung erreicht.

Die Anwendung der Erfindung ist jedoch nicht auf stehende
Behälter mit senkrechter Rührwerkswelle beschränkt, sondern
sie kann auch bei Rührwerken mit liegender Rührwerkswelle
für liegende Behälter angewendet werden. Auch dort erhält
man eine sehr gute Durchmischung des Mischgutes.

Weiter kann die Erfindung sowohl bei Rührwerken verwirklicht
sein, bei denen die Mischflügel unmittelbar an der Rührwerkswelle befestigt sind, als auch bei Rührwerken, bei
denen die umlaufende Welle von ihr abstehende Stäbe aufweist, an denen Mischflügel befestigt sind. In diesem Falle
kann bei Ausführungsformen der Erfindung der Flügelabschnitt
mit dem größeren Anstellwinkel an dem Stab befestigt sein.

Bei Ausführungsformen der Erfindung kann dem ersten Flügelabschnitt mit größerem Anstellwinkel nur ein zweiter
Flügelabschnitt vorauslaufen, dessen Anstellwinkel kleiner
als der des ersten Abschnittes ist, bei anderen Ausführungsformen der Erfindung kann sich jedoch in beiden Umlaufrichtungen gesehen an den Flügelabschnitt mit größerem Anstellwinkel je ein Flügelabschnitt mit kleinerem Anstellwinkel
anschließen. Dies hat zum einen den Vorteil, daß die in
Drehrichtung vor dem Flügel befindliche, in Längsrichtung
der Welle transportierte Portion des Mischgutes sich nach
dem Anheben oder Herunterdrücken durch den Abschnitt mit
größerem Anstellwinkel im Bereich des Abschnittes mit kleinerem Anstellwinkel beruhigt. Zum anderen ist diese Ausführungsform auch vorteilhaft bei Rührwerken, bei denen die
Rührwerkswelle in beiden Umlaufrichtungen angetrieben werden
kann.

Bei Ausführungsformen der Erfindung geht der Flügelabschnitt
mit größerem Anstellwinkel über eine Kante in den Flügelabschnitt mit kleinerem Anstellwinkel über. Bei anderen
Ausführungsformen der Erfindung kann dieser Übergang durch eine Wölbung erfolgen. Schließlich kann bei weiteren Ausführungsformen der Erfindung der ganze Flügel S-förmig gebogen
sein.

Bei Ausführungsformen der Erfindung steht der Flügelabschnitt mit dem kleineren Anstellwinkel in einem Winkel
zwischen 0° und 15° zur Rotationsebene, der Flügelabschnitt
mit dem größeren Anstellwinkel kann in einem Winkel zwischen
15 und 45° zu dem Abschnitt mit kleinerem Anstellwinkel
verlaufen.

Bei der Ausführungsform der Erfindung, bei der die Mischflügel an radial von der Rührwerkswelle abstehenden Stäben
befestigt sind, können die Mischflügel auch so angeordnet
sein, daß sie das Mischgut in radialer Richtung bewegen. Bei
Rührwerken mit senkrechter Rührwerkswelle kann beispielsweise eine solche waagrechte Bewegung des Behälterinhalts
angestrebt werden, wenn beabsichtigt ist, eine Entmischung
des Behälterinhalts und damit ein Absetzen von schweren
Bestandteilen des Mischgutes zu begünstigen.

Die Mischflügel zerteilen einen an der Oberfläche befindlichen Tresterkuchen schonend und trotzdem vollständig und
sorgen für eine intensive Durchmischung der Maische, die
dadurch auch sehr gut pumpfähig wird. Dieser Mischeffekt
wird unabhängig von der Füllhöhe gleichmäßig erreicht.

Besonders zweckmäßig sind Ausführungsformen der Erfindung,
bei denen eine Gruppe von Mischflügeln in einer Drehrichtung
und eine andere Gruppe von Mischflügeln in einer der anderen Drehrichtung, also mit in entgegengesetzter Richtung angestellt ist. Dabei können die Mischflügel der beiden Gruppen
in Drehrichtung hintereinander angeordnet sein oder, zum
Beispiel bei der Ausführungsform der Erfindung, bei der die
Mischflügel an Stäben angeordnet sind, auch in radialer
Richtung nebeneinander angeordnet sein. Folgen bei einem
Rührwerk mit senkrechter Rührwerkswelle Mischflügel der
beiden Gruppen in Drehrichtung aufeinander, sind die Mischflügel oder die diese haltenden Stäbe in der gleichen Ebene
gegeneinander z.B. um 180° versetzt auf der Welle befestigt, so wird das Mischgut vom einen Mischflügel in der
einen und vom anderen Mischflügel in der entgegengesetzten
Richtung transportiert. Durch die nach der einen und anschließend nach der anderen Richtung erfolgende "Schüttelbewegung" wird der Beälterinhalt besonders innig und doch
schonend durchmischt, insbesondere bei Rotweinmaische und
abgetropfter Weißweinmaische wurden sehr gute Ergebnisse
erzielt.

Bei anderen Ausführungsformen sind die Mischflügel der
beiden Gruppen so angeordnet, daß weniger eine "Schüttelbewegung" erfolgt, sondern in zylindermantelförmigen Bereichen
um die Rührwerkswelle mit größerem Radius das Mischgut im
wesentlichen in der einen Richtung, in einen um die Rührwerkswelle liegenden Bereich mit kleinerem Radius jedoch in
der anderen Richtung bewegt wird.

Schließlich sind Ausführungsformen der Erfindung zweckmäßig,
bei denen die Volumbereiche, die von aufeinanderfolgenden
Mischflügeln überstrichen werden, sich überlappen, beispielsweise zur Hälfte.

Die Mischflügel können bei Ausführungsformen der Erfindung
längs der Welle versetzt in der gleichen Drehlage und/oder
in der Drehrichtung der Welle versetzt zueinander angeordnet
sein.

Ausführungsformen der Erfindung können dahingehend weiter
ausgebildet sein, daß beispielsweise bei stehender Anordnung
der Rührwerkswelle zwei übereinander angeordnete Mischflügel
einen relativ großen Abstand voneinander aufweisen, wenn
gegenläufig arbeitende Mischflügel übereinander angeordnet
sind, damit der darüberliegende Mischflügel nicht den Mischguttransport des darunterliegenden Mischflügels bremst. Bei
anderen Ausführungsformen der Erfindung sind übereinanderliegend nur Mischflügel angeordnet, die den Behälterinhalt
in der gleichen Richtung bewegen. Dadurch ist es möglich,
daß der Abstand zwischen übereinanderliegenden Mischflügeln
klein gehalten werden kann, weil in diesem Falle der darüberliegende Mischflügel die Transportbewegung des darunterliegenden Mischflügels nicht bremst, sondern unterstützt.

Bei Ausführungsformen der Erfindung können die Mischflügel
an Stäben so befestigt sein, daß sie um eine zur Stabachse
senkrechte Achse drehbar und einstellbar sind. Auch können
bei Ausführungsformen der Erfindung an Stäben befestigte
Mischflügel so befestigt sein, daß sie entweder nur oder
zusätzlich zu der oben erwähnten Einstellbewegung auch um
eine zur Stabachse parallel verlaufende Drehachse an dem
Stab befestigt sind. Bei der letztgenannten Ausführungsform
kann der Mischflügel mit Hilfe eines feststellbaren Kugelgelenkes an dem Stab befestigt sein. Auch diese Auführungsformen der Erfindung tragen dazu bei, die Einstellung der
Mischflügel individuell der Art und der Konsistenz des
Behälterinhaltes und dem bei seiner Bearbeitung erfolgten
Zweck entsprechend zu wählen.

Bei Ausführungsformen der Erfindung könnn die unmittelbar an
der Welle angeordneten Mischflügel oder die Stäbe, die die
Mischflügel tragen, so an der Rührwerkswelle befestigt sein,
daß ihre Achsen nicht rechtwinklig, sondern schräg zu der
Rührwerkswelle verlaufen. Dadurch lassen sich auf den oben
liegenden Flächen der Stäbe und Rührflügel nach dem Entleeren des Behälters noch verbleibende Reste durch Abspülen
leicht entfernen. Bei Ausführungsformen der Erfindung kann
der Winkel, mit dem die Stäbe oder die Flügel zu der Achse
der Rührwerkswelle verlaufen, einstellbar und feststellbar
sein.

Der Querschnitt von die Mischflügel tragenden Stäben kann
rund sein. Er kann jedoch auch eine ebene Außenfläche aufweisen, in deren Bereich ein ebener Abschnitt des Mischflügels am Stab befestigt wird. Bei einer Ausführungsform der
Erfindung weist daher der Stabquerschnitt etwa die Form
eines Dreiecks auf, wobei dann die Mischflügel an den schräg
nach oben verlaufenden Außenflächen des Querschnitts befestigt werden. Der Stabquerschnitt kann jedoch auch die Form
eines auf die Spitze gestellten Dreiecks oder einer Raute
mit unterschiedlicher Seitenlänge aufweisen, deren zwei
einander gegenüberliegende Winkel gleich sind.

Bei einer Weiterbildung dieser Ausführungsformen der Erfindung ist der Querschnitt der Stäbe hohl. Dadurch ist es
möglich, die Stäbe in ein Heiz- oder Kühlsystem mit einzubeziehen. Vorzugsweise ist diese Ausführungsform der Erfindung
dahingehend weiter ausgebildet, daß der hohle Querschnitt
durch eine längs verlaufende Zwischenwand in zwei Kanäle
unterteilt ist, die von dem Heiz- oder Kühlmedium in unterschiedlicher Richtung durchflossen werden.

Die Tendenz des Mischgutes, mit dem Rührwerk mitzurotieren,
nimmt von der Wandfläche nach innen in Abhängigkeit von der
Konsistenz des Mischgutes ab. Der zweckmäßigste Abstand der
Mischflügel von der Behälterwand hängt daher vom jeweiligen
Mischgut ab. Bei Ausführungsformen der Erfindung beträgt der
kleinste Abstand eines Mischflügels von der Behälterinnenwand, also der radiale Abstand der Enden eines gerade verlaufenden Mischflügels, etwa 1/20 des Behälterdurchmessers,
der größte Abstand des Mischflügels von der Behälterwand,
also in der Mitte zwischen den beiden Enden, beträgt
ca. 1/10 des Behälterdurchmessers. Diese Maßverhältnisse
können jedoch in einem verhältnismäßig breiten Bereich
variieren.

Weitere Merkmale und Vorteile der Erfindung ergeben sich aus
der nachfolgenden Beschreibung von Ausführungsformen der
Erfindung in Verbindung mit den Ansprüchen und der Zeichnung. Die einzelnen Merkmale können je einzeln für sich oder
zu mehreren in beliebiger Kombination bei einer Ausführungsform der Erfindung verwirklicht sein.

In der Zeichnung sind Ausführungformen der Erfindung
dargestellt.

Fig. 1    zeigt einen Schnitt durch eine Ausführungsform des
          erfindungsgemäßen Behälters, wobei der besseren
          Darstellung wegen an den unteren beiden Stäben
          keine Mischflügel eingezeichnet sind;

Fig. 2    zeigt eine Ansicht und einen Schnitt nach der Linie
          II-II der Fig. 1 in größerem Maßstab;

Fig. 3    zeigt einen Schnitt und eine Ansicht nach der Linie
          III-III der Fig. 1, ebenfalls in größerem Maßstab;

Fig. 4    zeigt einen Schnitt nach der Linie IV-IV der Fig. 1
          in größerem Maßstab mit an dem Stab befestigtem
          Mischflügel;

Fig. 5    zeigt einen Schnitt nach der Linie V-V der Fig. 1
          in vergrößertem Maßstab mit an dem Stab befestigtem
          Mischflügel.

Fig. 6
und 7     weitere Ausführungsformen von Mischflügeln.

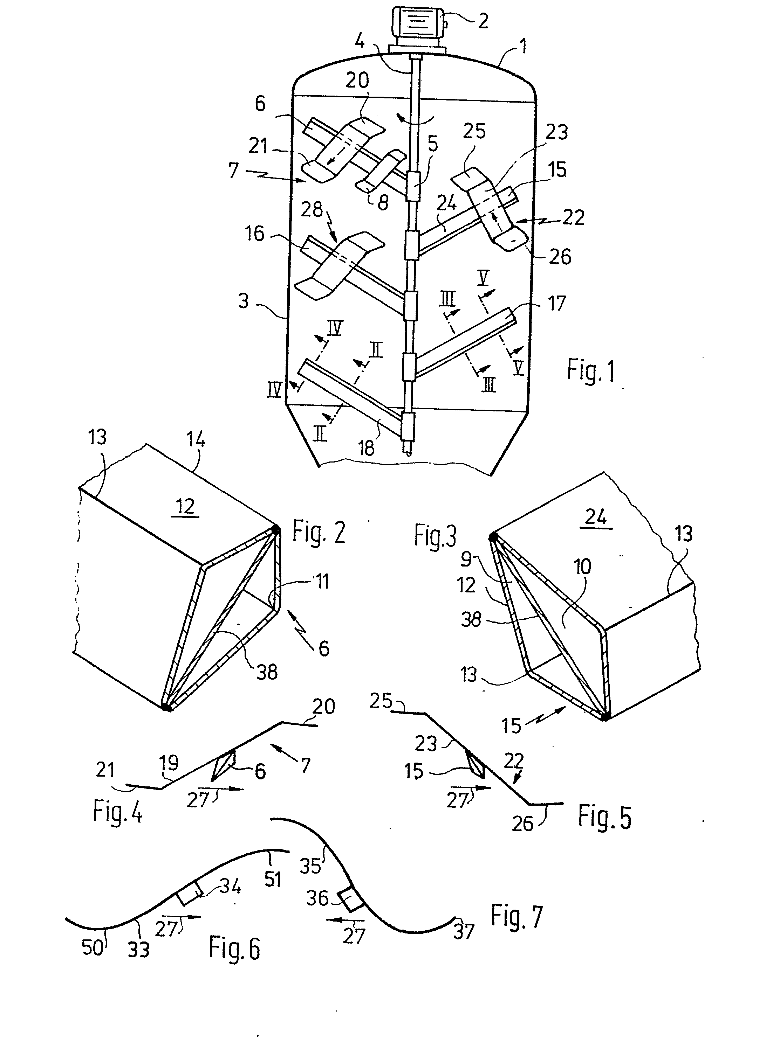

Bei der in der Zeichnung dargestellten Ausführungsform der
Erfindung ist auf der oberen Abdeckung 1 eines Gärbehälters
ein Getriebe-Elektromotor 2 befestigt, der eine in dem
zylindrischen Teil 3 des Gärbehälters zentrisch angeordnete
Welle antreibt, die in nicht gezeichneten Lagern drehbar gelagert ist. An der Welle 4 sind mit Hilfe von Muffen 5 in
einer radialen Ebene abstehende Stäbe 6, 15, 16, 17 und 18
befestigt. Diese Stäbe verlaufen in einer die Achse der Welle 4 enthaltenden radialen Ebene schräg nach außen und oben. An diesen Stäben sind Mischflügel 7 und 8 befestigt, wobei in Fig. 1 der besseren Darstellung halber lediglich am Arm 6 zwei Mischflügel 7 und 8 längs des Stabes 6 im Abstand voneinander eingezeichnet sind.

Der außen am Stab 6 angeordnete Mischflügel 7 ist in seinen Maßen größer als der innen angeordnete Mischflügel 8, jedoch hat der Mischflügel 8 die gleichen Maßverhältnisse wie der Mischflügel 7. Es könnte auch der innere Flügel größer sein als der äußere.

Die Stäbe 6, 15, 16, 17 und 18 weisen einen hohlen Querschnitt auf, der aus den Fig. 2 und 3 deutlicher hervorgeht. Der hohle Querschnitt weist eine Rautenform mit unterschiedlich langen Seiten auf, die beiden stumpfen Winkel des Rautenquerschnittes sind etwa gleich, wogegen die beiden spitzen Winkel unterschiedlich groß sind, diejenigen Seitenflächen, die den spitzigeren Winkel der beiden spitzigen Winkel des Rautenquerschnittes begrenzen, sind größer als diejenigen Seitenflächen, die den stumpferen Winkel der beiden spitzigen Winkel des Rautenquerschnittes begrenzen. Der hohle Querschnitt ist durch eine Zwischenwand 38 unterteilt, so daß sich in dem Stabquerschnitt zwei Kanäle 9 und 10 bilden, die am freien Stabende miteinander verbunden sind und zum Durchfluß eines Heiz- oder Kühlmediums dienen. In der Welle 4 sind ebenfalls zwei in der Zeichnung nicht dargestellte Kanäle vorgesehen, die ebenfalls das Heiz- oder Kühlmedium führen und die mit den Kanälen 9 und 10 der Stäbe 6 verbunden sind.

Die Stäbe 6 sind aus Edelstahlblechstreifen 11 und 12 hergestellt, die zur Bildung der langen Querschnittsfläche und
der kurzen Querschnittsfläche eine Abkantung 13 aufweisen.
Längs ihrer oberen Kanten 14 und ihrer unteren Kanten 14'
sind die Bleche 11 und 12 und auch das die Trennwand bildende Blech miteinander verschweißt.

Die Mischflügel 7 weisen einen mittleren Abschnitt 19 auf,
an dessen beiden einander gegenüberliegenden Seiten einander
entgegengesetzt abgekantete Abschnitte 20 und 21 sich anschließen. Der Mischflügel 7 ist an dem Arm 6 an der kleineren Wand 12 befestigt, in der Ansicht in Fig. 1 an der Vorderseite des Armes 6. Der abgekantete obere Teil 20 weist in
Fig. 1 nach hinten, der abgekantete Teil 21 nach vorn. In
der gleichen Weise ist der kleinere Mischflügel 8 an dem Arm
6 befestigt. An dem Arm 16 sind die Mischflügel 7 und 8 in
der gleichen Weise wie an dem Arm 6 befestigt. Die Arme 6,
16 und 18 sind an der Welle 4 so befestigt, daß die kürzeren
Querschnittsseiten oben angeordnet sind. Demgegenüber sind
die Arme 15 und 17 so angeordnet, daß ihre längeren Querschnittsseiten nach oben ragen. An dem Arm 15 ist ein Mischflügel 22 so befestigt, daß sein Mittelteil 23 an der in
Fig. 1 vorderen, nach oben gerichteten längeren Fläche 24
anliegt. Der obere abgekantete Teil 25 dieses Mischflügels
22 weist nach hinten, der untere abgekantete Teil 26 des
Mischflügels nach vorn. Die Welle 4 wird in Fig. 1 von oben
gesehen im Uhrzeigersinn angetrieben. Die Mischflügel 7 und
22 werden dann in der in den Fig. 4 und 5 mit dem Pfeil 27
bezeichneten Richtung durch den Behälterinhalt hindurchbewegt. Dabei bewegt der Mischflügel 22 den Behälterinhalt nach oben, der Mischflügel 7 dagegen den Behälterinhalt nach unten. Die Länge der Mischflügel ist so gewählt, daß der ringförmige Bereich, in dem der Mischflügel 22 umläuft, den ringförmigen Bereich, in dem der Mischflügel 7 umläuft, in axialer Richtung zur Hälfte überlappt. Die andere Hälfte des durch den Mischflügel 22 bearbeiteten Bereichs des Behälterinhalts wird durch den oberen Teil des Mischflügels 28 nochmals bearbeitet, der auf dem Stab 16 in der gleichen Weise befestigt ist wie der Mischflügel 7 auf dem Stab 6. Dem kleineren Mischflügel 8 auf dem Arm 6 entsprechende Mischflügel sind in der gleichen Weise wie die Mischflügel 22 und 28 auf den Stäben 15, 16, 17 und 18 befestigt, der Stab 18 trägt an seinem Stabende auch einen dem Mischflügel 28 entsprechenden großen Mischflügel. Durch die Überlappung der Arbeitsbereiche der Mischflügel 22, 7 und 28 wird der Behälterinhalt aufeinanderfolgend durch den Mischflügel 7 nach unten, durch den Mischflügel 22 nach oben, durch den Mischflügel 28 wieder nach unten und durch den am Arm 17 angeordneten Mischflügel wieder nach oben bewegt, wobei zwischen den Einwirkungen der Mischflügel auf eine Volumeinheit eine Pause eingeschaltet ist, da die Umlaufgeschwindigkeit der Welle 4 nicht besonders hoch ist. Die Welle 4 dreht sich mit einer Geschwindigkeit von etwa 0,5 bis 30 Umdrehungen pro Minute bei einem Rührwerkdurchmesser von ca. 1,30 m und einem Behälterdurchmesser von etwa 1,35 m. Die Breite der Mischflügel beträgt ca. 25 cm und ihre Länge über alles ca. 60 cm. Diese Maßverhältnisse sollen nur eine ungefähre Vorstellung vermitteln, sie können bei einzelnen Behältern auch anders gewählt sein. Die Teile des Behälters bestehen im Beispiel, wo immer möglich, aus Edelstahl.

Die Endabschnittte 20, 21, 25, 26, 50 und 51 der Mischflügel
sind im Ausführungsbeispiel gegenüber der Waagrechten geringfügig geneigt, und zwar mit einer zur Neigung des mittleren Abschnitts 19 bzw. 23 gleichen oder aber entgegengesetzten Neigung. Eine in einem kleinen Winkel entgegengesetzte Neigung kann sich bei bestimmten Befestigungsanlagen
des Mischflügels ergeben, beeinträchtigt aber die vorschneidende Wirkung der Endabschnitte nicht. Die Arme 6, 15 bis 18
sind um ihre Längsachse so verdreht an der Welle 4 befestigt, daß diese Arme die Mischwirkung der an ihnen befestigten Mischflügel unterstützen; das in der Symmetrieebene
dieser Arme angeordnete Blech 38 ist also gegenüber einer
lotrechten Ebene geneigt, wie auch aus den Fig. 2 bis 5 hervorgeht. Bei anderen Ausführungsformen können die Stäbe so
angeordnet sein, daß bei ein- und demselben Behälter sowohl
von der Achse nach außen hin ansteigende Stäbe als auch von
der Achse nach außen hin abfallende Stäbe vorhanden sind.

Der Behälter kann rund oder kubisch sein, bei unterschiedlichen Behältern können unterschiedliche Böden vorhanden
sein, insbesondere ein gewölbter Boden oder ebener Boden
oder ein solcher mit einem exzentrischen Konus. Als Material
kann Stahl, Edelstahl oder Kunststoff verwendet sein, dies
gilt sowohl für den Behälter als auch für die Teile des
Rührwerks. Die Rührwerkswelle kann auch außerhalb der Achse
des Behälters angeordnet sein.

17

Durch Anordnung und Form der Mischflügel kann zusätzlich zu
der Schüttelbewegung auch ein Wellengang bewirkt werden, der
eine gleichmäßige Durchmischung des Behälterinhalts unterstützt.

Der erfindungsgemäße Behälter eignet sich insbesondere zur
Behandlung von Rotweinmaische während der Gärung und zum Behandeln von Weißweinmaische nach der Entsaftung, um dadurch
die Weißweinmaische hinreichend fließfähig zu halten, so daß
sie aus dem Behälter nach der Entsaftung entleert werden
kann.

Die Fig. 6 und 7 zeigen in einer den Fig. 4 und 5 ähnlichen
Darstellung Ansichten weiterer Mischflügel und Arme. In Fig.
6 ist ein im Querschnitt etwa S-förmig gebogener Flügel 33
an einem viereckigen Träger 34 befestigt, wobei die beiden
Endabschnitte 50, 51 des Flügels 33 unterschiedlich stark
gekrümmt sind. Die Bewegungsrichtung des Flügels 33 ist, wie
auch bei den weiteren Figuren, durch einen Pfeil 27 angedeutet. In Fig. 7 ist wiederum ein etwa S-förmig gebogener
Mischflügel 35 an einem viereckigen Träger 36 befestigt, wobei die nacheilende Kante 37 dieses Flügels schaufelartig
nach oben gebogen ist, so daß dieser Flügel für eine stärkere Durchwirbelung sorgt.

Der zylindrische Abschnitt 3 des im Ausführungsbeispiel gezeigten Behälters hat eine Höhe von etwa 2 m, die Länge der
Arme beträgt etwa 210 cm. Zusammen mit dem nur unvollständig
dargestellten konusförmigen Unterteil hat der Behälter eine
Höhe von etwa 430 cm.

Bei der Gärung steigen die Trester nach oben und bilden einen festen Tresterkuchen. Daher würde eine reine Rührbewegung für sich allein keinen Erfolg haben, die Maische würde sich im wesentlichen mitdrehen. Durch die erfindungsgemäße Ausbildung der Flügel werden jedoch Teile des Tresterkuchens angeschnitten und angehoben. Der in entgegengesetzter Richtung angestellte erfindungsgemäße Flügel schneidet ebenfalls vom Tresterkuchen ein Stück ab und drückt diesen nach unten in den Saft ein. Durch dieses Heben und Senken der Trester wird aus den Traubenschalen der Farbstoff ausgespült. Damit entsteht die schonenste Bewegung der Traubenmaische mit großem Spül- und Mischeffekt, der eine ausgezeichnete Farbe des Weines, jedoch eine geringe Gerbstoffauslaugung der gärenden Maische bewirkt.

Die Drehzahl des Rührwerks liegt zwischen 0,5 und 6 Drehungen pro Minute, wobei das Rührwerk mit wechselnder Drehrichtung angetrieben werden kann und wobei zwischen zwei Drehrichtungen Stillstandszeiten eingeschoben werden können. Auch der Trübstoffgehalt ist bei diesem Rührverfahren sehr gering. Das Einschalten von Stillstandszeiten des Rührwerks hat auch den Vorteil, daß die Tendenz der Maische, mit dem Rührwerk mitzurotieren, außerordentlich gering ist, insbesondere dann, wenn nach der Stillstandszeit oder aber anstelle der Stillstandszeit die Drehrichtung des Rührwerks gewechselt wird. Je mehr aber bereits durch ein Rührverfahren die Tendenz der Maische zum Mitrotieren verringert wird, desto eher kann auf störende Gegenhalter innerhalb des Behälters verzichtet werden, die sowohl die Bewegung der Trester in senkrechter Richtung behindern, als auch beim Reinigen des Behälters besonders störend empfunden werden.

Die erfindungsgemäßen Rührflügel eignen sich auch für das
Durchmischen der Maischen, die für die Gewinnung von technischem Alkohol hergestellt werden.

Patentansprüche

1. Rührwerk für Traubenmaische, das eine umlaufende Welle und blattförmige Mischflügel aufweist, die mindestens einen in einem Winkel schräg gegen die Umlaufrichtung angestellten ersten Abschnitt aufweisen, dadurch gekennzeichnet, daß sich an den ersten Abschnitt (19, 23)in mindestens einer Umlaufrichtung gesehen ein zweiter in gleicher Richtung angestellter Flügelabschnitt (20, 21, 25, 26, 50, 51) anschließt, dessen Anstellwinkel kleiner als der des ersten Abschnitts ist.

2. Rührwerk nach Anspruch 1, dadurch gekennzeichnet, daß sich an den ersten Abschnitt (19, 23) in beiden Umlaufrichtungen gesehen ein Flügelabschnitt (20, 21, 25, 26, 50, 51) mit kleinerem Anstellwinkel anschließt.

3. Rührwerk nach Anspruch 1 oder 2, dadurch gekennzeichnet, daß der Flügelabschnitt (19, 23) mit größerem Anstellwinkel über eine Kante in den Flügelabschnitt (20, 21, 25, 26) mit dem kleineren Anstellwinkel übergeht.

4. Rührwerk nach Anspruch 1 oder 2, dadurch gekennzeichnet, daß der Flügelabschnitt mit größerem Anstellwinkel über eine Wölbung in den Flügelabschnitt (50, 51) mit dem kleineren Anstellwinkel übergeht.

5.  Rührwerk nach einem der vorhergehenden Ansprüche,
    dadurch gekennzeichnet, daß der Flügelabschnitt mit
    dem kleineren Anstellwinkel (20, 21, 25, 26) mit dem
    Flügelabschnitt (19, 23) mit dem größeren Anstellwinkel einen Winkel von 30° bis 60° bildet.

6.  Rührwerk nach einem der vorhergehenden Ansprüche,
    dadurch gekennzeichnet, daß der Flügelabschnitt
    (20, 21, 25, 26, 50, 51) mit dem kleineren Anstellwinkel in einem Winkel zwischen 0° und 15° zur Rotationsebene verläuft.

7.  Rührwerk nach einem der vorhergehenden Ansprüche,
    dadurch gekennzeichnet, daß zwei Gruppen (7, 8,
    28; 22) von länglichen gegenläufig angestellten Mischflügeln vorgesehen sind, von denen die eine Gruppe
    (7, 8, 28) der Mischflügel bei der Drehung in einer
    Richtung das Mischgut in eine Richtung befördert, die
    andere Gruppe (22) der Mischflügel bei der gleichen
    Drehrichtung das Mischgut in die entgegengesetzte
    Richtung befördert.

8.  Rührwerk nach einem der vorhergehenden Ansprüche,
    dadurch gekennzeichnet, daß ein Mischflügel der einen
    Gruppe und ein Mischflügel der anderen Gruppe in der
    gleichen zur Rührwerkswelle (4) rechtwinkligen Ebene
    angeordnet sind.

9. Rührwerk nach Anspruch 1 bis 7, dadurch gekennzeichnet, daß ein Mischflügel (7) der einen Gruppe und ein Mischflügel (22) der anderen Gruppe in im Abstand voneinander verlaufenden, rechtwinklig zur Rührwerkswelle verlaufenden Ebenen des Behälters angeordnet sind.

10. Rührwerk nach Anspruch 8 oder 9, dadurch gekennzeichnet, daß beide Mischflügel (7, 22) den gleichen Abstand von der Rührwerkswelle aufweisen.

11. Rührwerk nach einem der vorhergehenden Ansprüche, dadurch gekennzeichnet, daß die Mischflügel (7, 22) unterschiedlicher Gruppen in Drehrichtung der Rührwerkswelle gegeneinander versetzt angeordnet sind.

12. Rührwerk nach Anspruch 11, dadurch gekennzeichnet, daß Mischflügel (7, 22) um 180° gegeneinander versetzt sind.

13. Behälter nach einem der vorhergehenden Ansprüche, dadurch gekennzeichnet, daß in Drehrichtung aufeinanderfolgende, auf die gleiche Volumeinheit des Behälters einwirkende Mischflügel (7, 22,) verschiedenen Mischflügelgruppen angehören.

4

14. Behälter nach einem der Ansprüche 1 bis 13, dadurch gekennzeichnet, daß in Drehrichtung aufeinanderfolgende, auf die gleiche Volumeinheit des Behälters einwirkende Mischflügel der gleichen Mischflügelgruppe angehören.

15. Rührwerk nach Anspruch 13 oder 14, dadurch gekennzeichnet, daß die Mischflügel (7, 8, 22, 28) das Mischgut parallel zur Rührwerksachse (4) bewegen.

16. Rührwerk nach Anspruch 13 oder 14, dadurch gekennzeichnet, daß die Mischflügel das Mischgut rechtwinklig zur Rührwerksachse bewegen.

17. Rührwerk nach einem der Ansprüche 13 bis 16, dadurch gekennzeichnet, daß die Mischflügel so angestellt sind, daß die Ebene, innerhalb der die Mischflügel den Behälterinhalt hin- und herbewegen, innerhalb des Behälters unterschiedlich ist.

18. Rührwerk nach einem der Ansprüche 13 bis 16, dadurch gekennzeichnet, daß in Achsrichtung benachbart angeordnete Mischflügel in der gleichen Richtung angestellt sind.

19. Rührwerk nach Anspruch 18, dadurch gekennzeichnet, daß der Wirkungsbereich von in Achsrichtung benachbart angeordneter Mischflügel (7, 22) sich überlappt.

20. Rührwerk nach einem der vorhergehenden Ansprüche, dadurch gekennzeichnet, daß die umlaufende Welle (4) von ihr abstehende Stäbe (6, 15 bis 18) aufweist, an denen die Mischflügel befestigt sind.

21. Rührwerk nach Anspruch 20, dadurch gekennzeichnet, daß der Flügelabschnitt (19, 22) mit dem größeren Anstellwinkel an dem Stab befestigt ist.

22. Rührwerk nach Anspruch 20 oder 21, dadurch gekennzeichnet, daß längs eines Stabes (6) mindestens zwei im Abstand voneinander angeordnete Mischflügel (7, 8) vorgesehen sind.

23. Rührwerk nach einem der Ansprüche 20 bis 22, dadurch gekennzeichnet, daß die Ebene von streifenförmig ausgebildeten Mischflügeln (7, 8, 22, 33, 35) etwa parallel zu der Stabachse verläuft.

24. Rührwerk nach einem der Ansprüche 20 bis 23, dadurch gekennzeichnet, daß der Winkel, den die Längsachse der Mischflügel mit der Achse des Stabes bildet, einstellbar und feststellbar ist.

25. Rührwerk nach Anspruch 24, dadurch gekennzeichnet, daß das Befestigungsmittel, mit dem ein Michflügel an den Stab befestigt ist, so ausgebildet ist, daß die Lage des Mischflügels gegenüber der Stabachse einstellbar und feststellbar ist.

26. Rührwerk nach einem der Ansprüche 20 bis 25, dadurch
gekennzeichnet, daß die die Mischflügel (7, 8, 22, 28)
tragenden Stäbe (6, 15, 16, 17, 18) gegen die Achse
der Rührwerkswelle geneigt an der Welle (4) befestigt
sind.

27. Rührwerk nach einem der Ansprüche 20 bis 26, dadurch
gekennzeichnet, daß der Winkel, unter dem die Stäbe
gegen die Rührwerkswelle geneigt an dieser befestigt
sind, einstellbar und feststellbar ist.

28. Rührwerk nach einem der Ansprüche 20 bis 27, dadurch
gekennzeichnet, daß der Querschnitt der Stäbe etwa die
Form eines aufrechtstehenden Dreiecks aufweist.

29. Rührwerk nach einem der Ansprüche 20 bis 27, dadurch
gekennzeichnet, daß der Querschnitt der Stäbe (6, 15,
16, 17, 18) etwa die Form eines auf die Spitze gestellten Vierecks aufweist.

30. Rührwerk nach Anspruch 29, dadurch gekennzeichnet, daß
der Querschnitt der Stäbe (6, 15, 16, 17, 18) die Form
einer Raute mit unterschiedlicher Seitenlänge aufweist.

31. Behälter nach einem der Ansprüche 20 bis 30, dadurch gekennzeichnet, daß der Querschnitt der Stäbe (6, 15, 16, 17, 18) hohl ist.

32. Behälter nach Anspruch 31, dadurch gekennzeichnet, daß der hohle Querschnitt durch eine längs verlaufende Zwischenwand (38) in zwei Kanäle unterteilt ist, die von einem Heiz- oder Kühlmedium durchflossen sind.

33. Rührwerk nach einem der Ansprüche 1 bis 6 und 9 bis 19 mit unmittelbar an der Rührwerkswelle befestigten, radial sich erstreckenden Rührflügeln, dadurch gekennzeichnet, daß die radial verlaufende Achse der Rührflügel gegen die Achse der Rührwerkswelle schräg geneigt verläuft.

34. Rührwerk nach Anspruch 33, dadurch gekennzeichnet, daß der Winkel, den die radiale Achse der Rührflügel mit der Achse der Rührwerkswelle bildet, einstellbar und feststellbar ist.

35. Verfahren zum Rühren von Rotweinmaische unter Verwendung eines Rührwerks nach einem der vorhergehenden Ansprüche, dadurch gekennzeichnet, daß das Rührwerk mit einer Geschwindigkeit zwischen 0,5 und 6 Umdrehungen pro Minute angetrieben wird und daß nach 2 bis 5 Minuten die Antriebsrichtung des Rührwerks wechselt und/oder das Rührwerk zwischen 2 und 6 Minuten lang stillsteht.

Fig. 1

Fig. 2

Fig. 3

Fig. 4

Fig. 5

Fig. 6

Fig. 7